# EUROPÄISCHE PATENTSCHRIFT

(11) **EP 2 802 773 B1**
(45) Veröffentlichungstag und Bekanntmachung des Hinweises auf die Patenterteilung: **15.02.2017**
(21) Anmeldenummer: 12818990.9
(22) Anmeldetag: 12.12.2012
(51) Int. Cl.: F03D 17/00

(54) **WINDTURBINE MIT FERNWINDMESSER**
WIND TURBINE HAVING A REMOTE WIND GAUGE
TURBINE ÉOLIENNE MUNIE D'UN ANÉMOMÈTRE DE MESURE A DISTANCE

(30) Priorität: 14.01.2012 DE 102012000716
(43) Veröffentlichungstag der Anmeldung: 19.11.2014
(73) Patentinhaber: SSB Wind Systems GmbH & Co. KG, 48499 Salzbergen (DE)
(72) Erfinder: KÖTTING, Norbert, 48485 Neuenkirchen (DE)
(86) Internationale Anmeldenummer: PCT/EP2012/005114
(87) Internationale Veröffentlichungsnummer: WO 2013/104391

(56) Entgegenhaltungen:
- EP-A2- 2 025 929
- EP-B1- 1 597 592
- WO-A1-2011/150942
- WO-A2-2010/086631
- DE-A1-102009 040 235
- US-A1- 2010 143 136

## Beschreibung

Die Erfindung betrifft eine Windturbine mit einem Windmesser entsprechend dem Oberbegriff des Anspruches 1. Die Erfindung betrifft ferner einen Fernwindmesser mit einer Halterung für die Befestigung auf der Oberfläche einer rotierenden Nabe einer Windturbine entsprechend dem Oberbegriff des Anspruches 11.

Für die Wirtschaftlichkeit von Windturbinen zur Erzeugung elektrischer Energie aus der Windkraft ist die Erfassung und Messung von prädikativen Windeigenschaften (Windgeschwindigkeit und/ oder -profile) erforderlich. Die Kenntnis der Windeigenschaften ist insbesondere im Bereich der durch Wind hervorgerufenen Drehung eines Rotors der Turbine mit einer Rotornabe und radial zur Rotorachse sich erstreckenden Rotorblättern erforderlich. Der Rotor treibt einen in einem feststehenden Maschinenhaus - auch als Gondel bezeichnet - angeordneten elektrischen Generator an, der elektrische Energie erzeugt, die dann in ein elektrisches Netz eingespeist wird. In der Gondel, und meist auch im Rotor, sind Steuerungseinrichtungen vorgesehen, mit denen die Turbine in Abhängigkeit von gemessenen oder berechneten Windeigenschaften gesteuert wird. Sowohl der Rotor als auch die Gondel sind auf einem Turm angeordnet.

Mit zunehmender Nennleistung von Windturbinen nimmt deren Höhe und damit die der Rotornabe zu. Damit ist aber auch die exakte Messung der Windeigenschaften auf Nabenhöhe solcher Anlagen mit erheblichem Aufwand verbunden.

Der Stand der Technik bietet bezüglich der Erfassung der Windeigenschaften mehrere Möglichkeiten. Als einfachstes, jedoch ungenauestes Verfahren, bietet sich die Anordnung eines Anemometers in der Ausführung eines Windschalenmessgerätes an, das fest oben auf der feststehenden Gondel angeordnet ist, und lediglich die Windeigenschaften dort im Abstand vom rotierenden Teil der Turbine misst. Die Ergebnisse sind jedoch für eine prädikative Feststellung oder Messung vor der Nabe ungenau oder verfälschen die Ergebnisse, da in Folge der Windturbulenzen durch die Rotorblattdrehung die Messergebnisse von Windmessgeräten auf der Gondel sehr stark beeinflusst werden. Eine im Bereich der Nabe und den Rotorblättern auftretende vertikale Windscherung wird nicht erfasst.

Bekannt sind auch Fernwindmesseinrichtungen, die auf dem bekannten physikalischen Prinzip des optischen Dopplereffektes beruhen. Die Einrichtung wird meist vor der Anlage oder in der Hauptwindrichtung entweder auf dem Boden oder auf einem Mast (Metmast) aufgestellt und weist ein Fernwindmesser auf, der in einer bestimmten Richtung Strahlen mit einer bestimmten Frequenz ausgesendet. Aus den reflektierten Strahlen lassen sich dann bestimmte meteorologische Daten, darunter auch Windeigenschaften, vor der Anlage ermitteln. Die Doppleranlagen arbeiten entweder auf der Basis elektromagnetischer Strahlen (auch als LIDAR bekannt) oder der Basis akustischer Wellen (auch als SODAR bekannt).

US 6,535,158 B2 zeigt eine Fernwindmesseinrichtung, die auf einem meteorologischen Mast (Metmast) angeordnet ist, der vor und im Abstand von einer Windturbine aufgestellt ist. Senkrecht nach oben werden von dem Metmast Signale aussendet, wobei aus deren Reflektionssignale meteorologischen Daten, u.a. auch die Windeigenschaften vor der Windturbine ermittelt werden, die dann zu Steuersignale für die Windturbinensteuerung verarbeitet werden. Zusätzlich zu den Windeigenschaften erfassen die Dopplermessgeräte auch die vertikale Windscherung, wobei Messungen festgestellt haben, dass die vertikale Windscherung örtlich und zeitlich variiert.

Der Hauptvorteil einer auf den Dopplereffekt beruhenden Fernwindmesseinrichtung liegt darin, auch in großer Höhe Windeigenschaften und - profile messen zu können. Insbesondere in stark strukturierendes Gelände, wo z. B. im Wald eine Hauptwindmesseinrichtung liegt, ermöglicht ein LIDAR - oder SODAR System einen Vergleich zwischen einer Messung und einer Berechnung oder Speicherung von vorhandenen Winddaten. Ab einer bestimmten Nabenhöhe sind jedoch Fernwindmesser, die auf einem Metmast moniert sind, aufwendig und sehr kostspielig, wenn sie Windeigenschaften in Nabenhöhe der Windturbine messen sollen.

Der Nachteil solcher singulär aufgestellten Dopplermessanordnungen besteht zum einen darin, dass mit zunehmender Nabenhöhe die Messergebnisse ungenauer werden und zum anderen, dass bei Drehung des Rotors um eine senkrecht zur Drehachse ausgerichtet Achse (Gier-Achse) ein stationärer auf dem Boden oder auf einem Metmast aufgestellter Windmesser zunehmend ungenauere Windeigenschaften vor der Nabe der Windturbine ermittelt. Eine Messung des Gierfehlers der Turbine ist mit einem stationär angeordneten Fernwindmesser nicht möglich. Damit ist auch keine Lösung des Problems gegeben, wie gut eine existierende Windturbine dem Wind nachfolgen kann.

Um den Nachteil eines stationären LIDAR- oder SODAR Anordnung auszugleichen, wurde im Stand der Technik bereits vorgeschlagen, eine solche Anordnung mittels einer geeigneten Halterung entweder innerhalb der Nabe oder außen auf dessen Oberfläche anzuordnen, um so prädikativ auch bei einer Gierbewegung der Turbine zu exakten Ergebnissen der Windeigenschaften zu gelangen.

EP 1 597 592 B1 zeigt z. B. eine Windturbine mit einer LIDAR Einrichtung zur Messung der Windeigenschaften vor der Nabe der Windturbine, wobei der LIDAR jedoch im Inneren der Nabe an eine nicht näher spezifizierten Halterung montiert ist, und eine Blickrichtung aufweist, die zur Drehachse der Nabe geneigt ist, um bei drehender Nabe und einer Drehung um die Gier Achse der Turbine immer einen Bereich vor der Nabe abzutasten.

Nachteilig bei einer Anordnung des LIDARs innerhalb der Nabe ist jedoch der geringe verfügbare Montageraum für den LIDAR innerhalb der engen und mit mehreren anderen Geräten voll bepackten Nabe. Ein Zugang für Wartungs- und Reparaturarbeiten bzw. eines kompletter nachträglicher Ausbau- und Einbau des LIDARs ist nur mit erheblichem Aufwand möglich. Für eine zeitlich beschränkte vorübergehende Messung der Windeigenschaften zur Überprüfung von anderen Windmesseinrichtungen oder zur Überprüfung von vorab für die Turbinensteuerung hinterlegten Messwerte für die Windeigenschaften ist eine Anordnung des LIDARs innerhalb der Nabe nur bedingt geeignet. Des Weiteren ist nachteilig, dass die Anordnung des LIDARs innerhalb der Nabe nur ein sehr beschränktes Abtastfeld der Windeigenschaften vor der Windturbine ermöglicht.

Fernwindmesser, die auf der Oberfläche einer sich drehenden Rotornabe einer Windturbine angeordnet sind, und die Windeigenschaften prädikativ vor der Nabe feststellen bzw. messen können, sind beispielsweise durch DE 10 2009 015 679 A1 oder EP 1 770 278 A1 bekannt.

Fernwindmesser auf der rotierenden Nabe bieten den Vorteil, dass sie wartungsfreundlich sind und eine gute Zugänglichkeit bieten. Insbesondere können somit Turbinen ohne großen Aufwand mit einem Fernwindmesser nachgerüstet werden und ggf. auch ohne großen Aufwand auch wieder abgebaut werden können.

EP 2 025 929 A2 zeigt eine Windturbine mit einer um eine Rotorachse rotierenden Rotornabe mit radial zur Rotorachse sich erstreckenden im gleichen Winkelabstand zueinander angeordnete Rotorblättern und einen außen auf der Oberfläche der Nabe befestigten Fernwindmesser, der so ausgerichtet ist, dass Windeigenschaften im Abstand vor der Nabe feststellbar sind bzw. gemessen werden können.

Voraussetzung für die Anordnung eines auf der Nabe rotierenden Fernwindmessers ist jedoch eine geeignete Halterung und einer Befestigungsvorrichtung, mittels dessen der Fernwindmesser auf der rotierenden Nabe befestigt ist. Auf Grund des Einsatzortes mit seinen zum Teil extremen klimatischen, statischen, dynamischen und kinematischen Anforderungen werden an der Halterung und Befestigung jedoch erhöhte Anforderungen gestellt.

Fernwindmesser zum Einsatz Außen auf der Nabe der Windturbine müssen daher von einem kastenförmigen Schutzkörper umgeben werden, der mit der Nabe verbunden werden muß, um somit die empfindlichen dial abragen. Zusätzlich ist eine Halterung für das Messgerät zur Befestigung auf der Nabenoberfläche der Windturbine erforderlich. Die Befestigung der Halterung des Fernwindmessers auf der Oberfläche der Nabe benötigt daher eine spezielle Befestigungsart und einen speziellen Befestigungsort, damit das Messgerät seine Funktion erfüllen kann. Die bekannten Anordnungen bieten jedoch hierzu keinerlei Hinweise, da anscheinend bisher die Anordnung eines LIDARS oder SODARS auf der Nabe zwar in der Literatur angeben, bisher aber noch nicht technisch realisiert wurde.

Andererseits besteht aber Bedarf für eine solche Halterung und Befestigungsart eines Fernwindmessers auf der Nabe. Dies ist z. B. der Fall, wenn Turbinen mit einem Fernwindmesser nachgerüstet werden, oder nur zeitweise mit einer solchen Messeinrichtung ausgestattet werden, um entweder die Winddaten bestehende andere Messeinrichtungen, oder um Berechnungswerte, die als Steuerungswerte in der Turbinensteuerung abgelegte sind, zu überprüfen.

Es ist daher die Aufgabe der Erfindung für eine entsprechend im Oberbegriff des Anspruches 1 angegebene Windturbine mit einem Fernwindmesser eine geeignete Befestigungsart und einen geeigneten Befestigungsort für den Fernwindmessers auf der Oberfläche der Nabe anzugeben.

Die Lösung der Aufgabe erfolgt durch eine Windturbine mit den Merkmalen des Hauptpatentanspruches (Anspruch 1) und durch einen Fernwindmessser mit einer Halterung entsprechend den Merkmalen des Anspruches 11.

Vorteilhafte Weiterentwicklungen der Erfindung sind in den Unteransprüchen angegeben.

Die erfindungsgemäße Windturbine umfasst eine um eine Rotorachse rotierenden Rotornabe mit radial zur Rotorachse sich erstreckenden Rotorblättern und einem außen auf der Oberfläche der Nabe in einer Halterung befestigten Fernwindmesser, der so ausgerichtet ist, dass Windeigenschaften im Abstand vor der Nabe feststellbar sind bzw. gemessen werden können, wobei der Fernwindmesser zwischen zwei benachbarten Rotorblättern und in radialer Richtung der Rotorachse angeordnet, und die Halterung im Bereich der Verbindung der Rotornabe mit den Rotorblättern an jeweils einem Blattlagerflansch befestigt ist.

Der Fernwindmesser mit einer Halterung zur Befestigung auf der Oberfläche einer rotierenden Rotornabe der Windturbine mit radial zur Rotorachse der Nabe sich erstreckenden Rotorblättern, mittels dessen Windeigenschaften vor der Nabe feststellbar bzw. gemessen werden, ist dadurch gekennzeichnet, dass die Halterung Befestigungseinrichtungen für eine lösbare Verbindung der Halterung mit der Nabe zwischen zwei benachbarten Rotorblättern an jeweils einem Blattlagerflansch beider Rotorblätter aufweist.

Bei der Erfindung ist der Fernwindmessers mit einer Halterung auf der Oberfläche einer Nabe einer Windturbine zwischen zwei benachbarten Rotorblättern so angeordnet, dass der Fernwindmesser parallel zur Rotorachse ausgerichtet ist. Durch diese Ausrichtung des Fernwindmessers wird sichergestellt, dass bei rotierender Nabe ein Abtastfeld vor der Nabe entsteht, das nahezu kreisförmig ist, und nicht durch rotierenden Rotorblätter oder einem vor der Nabe angeordnetem Spinner eingeschränkt ist. Damit werden Windeigenschaften in einem breiten Bereich vor der Nabe optimal erfasst, die dann einer mit dem Windmesser verbundenen Turbinenanlagensteuerung zugeführt und zu Steuersignale für die Turbine verarbeitet werden können, oder die vom Fernwindmesser erzeugen Messwerte können mit anderen Mess- und Berechnungswerte verglichen werden, die von anderen Messgeräten (z. B. einem auf der Gondel angeordnetem Anemometer) erzeugt werden, bzw. als Berechnungswert schon vorab in der Turbinensteuerung abgelegt sind.

Bei der vorgeschlagenen Position des Fernwindmessers auf der Nabe sind keine oder nur geringe Neigungs- oder Justiereinstellungen des Messgerätes zur Rotordrehachse erforderlich. Der Befestigungsort der Halterung für den Fernwindmesser bietet darüber hinaus den Vorteil, dass dadurch das eingangs schon erwähnte Problem gelöst werden kann, inwieweit eine existierende Turbine dem Wind nachfolgen kann, oder inwieweit aktuelle Windmesswerte von andern Messwerten anderer Messeinrichtungen oder abgelegter Berechnungswerte von den aktuellen Werten abweichen. Die Kenntnis der aktuellen Werte hat erheblichen Einfluss auf die Rentabilität der Windturbine.

Erfindungsgemäß erfolgt die Befestigung der Halterung des Fernwindmessers im Bereich der Verbindung der Rotornabe mit den Rotorblättern an jeweils einem Blattlagerflansch. Die Naben von Windturbinen weisen an der Verbindungsstelle mit der Halterung üblicherweise flanscharige Verlängerung auf, an denen jeweils die Rotorblätter mit jeweils einem Blattlagerflansch befestigt sind. Der vorgeschlagene Befestigungsort bietet den Vorteil, dass die Halterung des Fernwindmessers sicher und ohne zusätzlichen Aufwand auf der Oberfläche der Nabe angeordnet werden kann. Außer an den beiden Befestigungsstellen hat die Halterung des Fernwindmessers keine direkte Verbindungsstelle zur Nabe der Windturbine. Er kann in dieser Position ohne großen Aufwand immer parallel zur Rotorachse ausgerichtet oder nachjustiert werden. Aufwendige Nachrüst- oder Umarbeiten im Bereich der Nabe sind nicht erforderlich, da für die Befestigung entweder vorhandene Befestigungsmöglichkeiten verwendet oder solche ohne großen Aufwand im Bereich Nabenflansch / Blattlagerflansch angebracht werden können.

Durch diese Maßnahme wird die Montage bzw. die Demontage des Windmessgerätes erheblich vereinfacht. Montiert bzw. Demontiert wird immer der Fernwindmesser komplett mit seiner Halterung auf der Nabe, wobei nur die Halterung mit der Nabe verbunden ist. Der Fernwindmesser wird zweckmäßig vorab in einer Werkstatt oder auf dem Boden mit seiner Halterung verbunden. Die komplette Anordnung kann dann z. B. durch eine Hebevorrichtung oder einem Kran zu der Befestigungsstelle von außen auf der Nabe angehoben und dort befestigt werden. Die Demontage erfolgt ebenfalls ohne großen Aufwand über eine Heb- oder Kranvorrichtung von außen.

Die vereinfache Montage und Demontage der kompletten Anordnung aus Fernwindmesser und Halterung ist darüber hinaus vorteilhaft auch für Wartungs- oder Reparaturarbeiten, da die Optik und Elektronik derartiger Messgeräte, die rotierend im Freien angeordnet sind, bei deren extremen klimatischen Einsatzbedingungen einen erhöhten Wartungs- und Reparaturzyklus erforderlich machen.

Der jeweilige Blattlagerflansch als Verbindungsstelle eines Rotorblattes mit dem Nabenflansch, an der die Halterung für den Fernwindmesser befestigt ist, umfasst vorteilhaft eine Schraub- und /oder Steckverbindung der Blattwurzel mit dem Metallflansch an der Nabe. Für die Verschraubung der Rotorblätter an dem Nabenflansch werden Hülsen für Längsbolzen in die Blattwurzel des Rotorblattes einlaminiert. Die Längsbolzen werden dabei außerhalb am Umfang der Nabe und des Rotorblattes geführt und mit Muttern befestigt.

In dem Verbindungsbereich mit dem nach außen geführten Bolzen - Mutterbereich des Blattlagerflansches kann eine zusätzliche Aufnahmevorrichtung mit einer Öse für die Befestigung der Halterung angebracht werden. Die Aufnahmevorrichtung kann entweder nachträglich bei einer existierenden Windturbine an den Stehbolzen für die Montage des Fernwindmessers befestigt werden. Alternativ kann die Aufnahmevorrichtung für die Halterung auch schon bei Errichtung der Turbine an der Verbindungsstelle des Blattlagerflansches mit dem Nabenflansch angebracht werden, zusammen mit der Befestigung eines Blattlagerflansches mit dem Nabenflansch.

Eine ganz besonders vorteilhafte Aufnahmevorrichtung für die Halterung des Fernwindmessers auf der Nabe bietet sich dann an, wenn bei der verwendeten Nabe Trageösen für ein Traggeschirr vorhanden sind, mit denen bei der Montage oder Demontage die Nabe durch einen Kran oder eine Hebevorrichtung an ein Maschinenhaus oder einer Rotorwelle befestigt oder demontiert werden soll. Diese Trageösen verbleiben währen des Betriebes der Windturbine an ihrer Position. An den beiden Ösen kann somit ohne großen Aufwand die Halterung befestigt werden. Die Windenergieanlagen des Herstellers General Electric Company mit einer Nennleistung von 1,5 M Watt der GE 1,5 Serie weisen z. B. solche Trageösen auf. Für die Montage der Nabe auf dem Turm sind diese Trageösen radial zur vorgesehenen Achse eines Blattlagerflansches oder Rotorblattes angebracht.

Der Verbindungsbereich eines Nabenflansches mit dem zugehörigen Rotorblatt umfasst auch eine Anordnung, bei der eine Tragemanschette um den Nabenflansch vorgesehen ist, wobei die Manschette eine am Flanschumfang angeordnete Gleitschiene aufweist, auf der eine verschiebbare und am Nabenumfang festklemmbare Transporthalterung angeordnet ist, wie dies z. B die DE 10 2009 040 235 A1 offenbart. Nach der Montage der Nabe an ein gegenüber der Nabe feststehendes Maschinenhau (Gondel) können die Transporthalterungen auf beiden Schienen am dem Nabenumfang so verschoben werden, dass sie nach der Montage der Nabe radial zur Rotordrehachse angeordnet werden und somit als Halterung für den Fernwindmesser verwendet werden.

Die Optik und Elektronik des Fernwindmessers umfasst vorteilhaft ein Messsystem. das auf der Basis eines LIDAR oder SODAR-Systems beruht. Solche Messsysteme sind bekannt und arbeiten nach dem eingangs schon erwähnten physikalischen Prinzip des Dopplereffektes. Als Schutz weisen somit solche empfindlichen Messvorrichtungen eine kastenförmige Umhüllung auf, die mit der Halterung verbunden ist.

Vorteilhaft ist die Halterung als Tragegestell ausgeführt, das auf einer Befestigungsscheibe ruht. An den beiden seitlichen Längsrändern der Scheibe können vorteilhaft auf jeder Seite jeweils ein Befestigungspunkt für die Trageösen der Nabe oder für ein andere, oben beschriebenen Befestigungsart der Halterung mit dem Blattlagerflansch, vorgesehen werden.

Da die Halterung des Fernwindmessers lediglich an zwei Befestigungspunkten mit der Nabe verbunden ist, ist eine Vorrichtung zur Vermeidung von Kippbewegungen des Fernwindmessers erforderlich. Dies wird durch eine zusätzliche Lageranordnung realisiert, die senkrecht zu der Verbindung der beiden Befestigungspunkte und in Richtung der Drehachse angeordnet ist. Die zusätzliche Lagerung umfasst eine einstellbare Justiereinrichtung, mit der die Neigung des Fernwindmessers zur Rotordrehachse einstellbar ist. Die Justiereinrichtung kann z. B. als Fuß ausgeführt werden, der an seinem abragenden Ende jeweils eine Einstellschraube aufweist, die sich auf der Oberfläche der Nabe abstützt, wodurch die Neigungseinstellung des Fernwindmessers zur Rotorachse nachjustierbar ist.

Als Sicherungsmaßnahme gegen eine Beschädigung der Rotorblätter oder der Nabe durch ein Lösen oder Herausfallen des Fernwindmessers aus der Halterung, bzw. ein Lösen der Halterung von seiner Verbindungsstelle mit der Nabe, können mechanische und /oder elektrische Sicherheitseinrichtungen vorgesehen werden, die mit einer Notabschalteinrichtung der Windturbine verbunden sind, mittels dessen ein sofortigen Stopp der Drehung der Rotorblätter veranlasst wird, so dass eine losgelöste Halterung oder ein aus der Halterung gelösten Fernwindmesser nicht zu Schäden am Rotorblatt führen kann. Als elektrische Sicherheitseinrichtung ist vorteilhaft eine elektrische Reihenschaltung mehrerer Sicherheitseinrichtungen der Halterung und / oder des Fernwindmessers vorzusehen, die in der Ausführung als Sicherheitskette mit der Notabschalteinrichtung der Turbine verknüpft ist.

Als weitere Sicherheitseinrichtung kann der Fernwindmesser mit einem Blitzschutz versehen werden. Die Halterung umfasst hierzu als Blitzableiter einen elektrischen Leiter, der bei der Montage des Fernwindmessers auf der Nabe eine elektrische Verbindung der Halterung mit der Nabe sicherstellt. Damit ist der Fernwindmesser integraler Bestandteil des Blitzschutzes der gesamten Turbine.

Bei der erfindungsgemäßen Windturbine kann der Windmesser integraler Bestandteil der Turbinensteuerung sein, d. h. die gemessenen Windeigenschaften werden mittel- oder unmittelbar zu Steuerbefehle für die Turbine verwendet. Diese Anordnung bietet sich an, wenn der Fernwindmesser dauerhaft für den Betrieb auf der Nabe angeordnet ist.

Alternativ kann der Fernwindmesser ebenso unabhängig vom Steuersystem der Windturbine arbeiten. Diese Arbeitsweise bietet sich an, wenn der Fernwindmesser nur in einem temporär begrenzten Zeitraum auf der Turbine angeordnet sein soll, um beispielsweise Vergleichsmessungen zu anderen auf der Anlage bestehenden Windmesseinrichtungen durchzuführen, um so deren Wirksamkeit zu überprüfen. Einen Eingriff in ein schon bestehendes Pitchsystem, mit dem die Verstellung der Rotorblätter um ihre Achsen gesteuert wird, oder in die Turbinensteuerung ist bei dieser Anordnung nicht erforderlich. Per Fernabfrage können die Messwerte des Fernwindmessers unabhängig von der Turbinenwerten zu einer übergeordneten Betriebsführung übertragen und dort entsprechend dem Bedarf ausgewertet werden.

Weitere vorteilhafte Ausführungen ergeben sich aus einem Ausführungsbeispiel, das anhand der Zeichnung nachfolgend näher erläutert wird.
Fig. 1 zeigt eine schematische Ansicht einer Windturbine mit einem Fernwindmesser in einer Seitenansicht.
Fig.2 zeigt eine schematische Darstellung eines Rotors der Windturbine in einer Frontansicht.
Fig.3 zeigt eine Seitenansicht des Fernwindmessers in einer Halterung an seinem Befestigungsort auf der Oberfläche einer Nabe der Windturbine.
Fig.4 zeigt eine alternative Befestigungsart zur Fig. 3.
Fig. 5 zeigt ein Detail der Befestigungsart der Fig. 3 und Fig. 4.

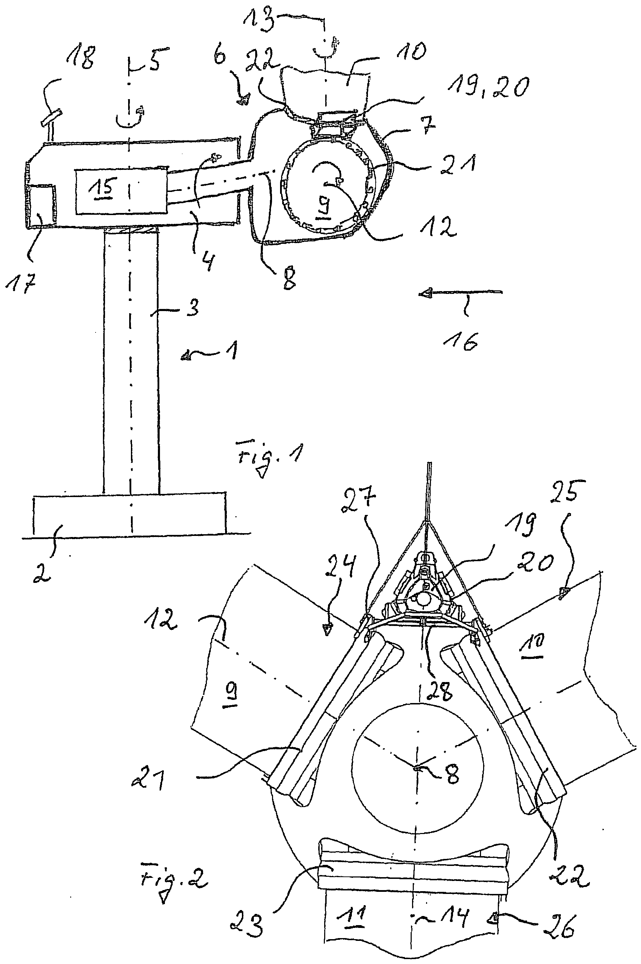

Fig. 1 zeigt eine Windturbine 1, die ein Fundament 2 mit aufsteigendem Turm 3 aufweist, wobei an seinem dem Fundament 2 abgewandten Ende ein als Gondel 4 bezeichnetes Maschinenhaus angeordnet ist. Die Gondel 4 ist drehbar auf dem Turm 3 gelagert und um die Turmachse 5 (Gierachse) schwenkbar und kann somit der Windrichtung nachfolgen. Von der Gondel 4 weg nach rechts ragt ein Rotor 6 ab, der eine (Rotor) Drehachse 8 und eine an seinem der Gondel 4 abgewandten Ende eine Rotornabe 7 mit radial zur Rotorachse 8 sich erstreckenden drei Rotorblättern aufweist, die mit den Bezugszeichen 9, 10 und 11 versehen sind. Auf Grund der schematischen Darstellungsweise sind in Fig. 1 nur die Rotorblätter 9 und 10 ersichtlich. Fig. 2 zeigt eine schematische Frontansicht des Rotors 6, aus der auch die Anordnung des Rotorblattes 11 ersichtlich ist. Jedes Rotorblatt ist üblicherweise um 120° auf dem Nabenumfang versetzt befestigt.

Aus Fig. 1 ist ferner ersichtlich, dass jedes Rotorblatt 9, 10 mit einem zentralen oder individuellem Verstellantrieb (Pitchantrieb) mechanisch gekoppelt ist, mittels welchem das jeweilige Rotorblatt 9, 10 und 11 um seine zugehörige Blattachse 12, 13 und 14 gedreht wird. Mit dieser Verstelleinrichtung können zusätzlich die Rotorblätter optimal in den Wind gedreht, bzw. aus diesem herausgedreht werden.

Die Verbindung zwischen einem Rotorblatt und einem Metallflansch an der Nabe 7 erfolgt über einen erstes Blattlagerflansch 21, an dem das Blatt 9 befestigt ist, ein weiterer Blattlagerflansch 22, an dem das Blatt 10 gelagert ist und ein dritter Blattlagerflansch 23, an dem das Blatt 11 befestigt ist. Die Nabe 7 weist an ihrer Verbindungsstelle zu dem jeweiligen Rotorblatt einen radial zur Rotorachse 8 gerichteten Metallflansch auf, der im Folgenden als Nabenflansch bezeichnet wird. Für die Verschraubung mit der Nabe 7 weist jeder Nabenflansch an seinem äußeren Umfang eine Bolzen- Mutterverbindung zum gehörigen Rotorblatt auf. Das am jeweiligen Blattlagerflansch 21, 22, und 23 befestigte Ende eines Rotorblattes 9, 10 und 11 wird als Blattwurzel bezeichnet, wobei die zugehörige Blattwurzel zum Blatt 9 das Bezugszeichen 24, die Blattwurzel zum Blatt 10 das Bezugszeichen 25 und die zughörige Blattwurzel zum Blatt 11 das Bezugszeichen 26 aufweist.

Der Rotor 6 ist mechanisch mit einem elektrischen Generator 15 gekoppelt, der in der Gondel 4 angeordnet ist und eine auf die einzelnen Rotorblätter 9, 10 und 11 wirkende Windkraft 16 zum größten Teil in elektrische Energie umwandelt. Für den kontrollierten Betrieb der Windturbine 1 ist eine Anlagensteuerung 17 vorgesehen, mittels welcher u.a. die Pitchantriebe und damit ein für die Energieumwandlung geeigneter Rotorblattwinkel gegenüber der Windkraft 16 eingestellt werden kann.

Zur optimalen Steuerung der Windturbine 1 ist die möglichst exakte prädikative Messung der Windeigenschaften vor der Windturbine und insbesondere auf Nabenhöhe erforderlich. Auf der Turbine 1, gemäß Fig. 1 sind daher zwei Windmesser 18 und 19 vorgesehen.

Das erste Messgerät 18 ist ein Anemometer, das auf einem dem Rotor 6 abgewandten Teil der Gondel 4 angeordnet ist. Auf Grund seines Standortes hinter dem Rotor 6 ist dessen Messung sehr stark durch die Turbulenzen beeinflusst, welche durch die Rotation der Rotorblätter verursacht werden.

Das zweite Messgerät mit dem Bezugszeichen 19 ist ein auf der Oberfläche der Nabe 7 in einer Halterung 20 (siehe insbesondere Fig. 2) befestigter Fernwindmesser 19, der so ausgerichtet ist, dass mittels dieser Anordnung Windeigenschaften im Abstand vor der Nabe feststellbar sind bzw. gemessen werden können. Der Fernwindmesser arbeitet nachdem physikalischen "Doppler Prinzip" und wird in der Praxis als LIDAR bezeichnet, wenn er auf der Basis von Laserstrahlen arbeitet. Wenn er auf der Basis von akustischen Wellen arbeitet, wird der in der Praxis als SODAR bezeichnet.

Auf Grund seines Standortes ist der LIDAR oder SODAR für eine exakte Feststellung der Windeigenschaften für die Turbine 1 besser geeignet als das auf der Gondel 4 angeordnete Anemometer 18. Der LIDAR 19 eignet sich somit als Vergleichsmessgerät zum Anemometer 18. Mittels des LIDARs 19 kann somit der Ertrag der Turbine 1 verbessert werden oder bestimmte in der Turbinensteuerung 17 abgelegte meteorologische Daten können mit Hilfe des LIDARS überprüft werden und ggf. korrigiert werden. Mit Hilfe des LIDARS 19 kann auch überprüft werden, inwiefern die Turbine exakt der Windrichtung nachfolgt.

Insbesondere aus Fig. 2 ist ersichtlich, dass der LIDAR 19 zwischen zwei benachbarten Rotorblättern und in radialer Richtung zur Rotorachse 8 angeordnet ist. Die Halterung 20 ist im Bereich der Verbindung der Rotornabe 7 mit benachbarten Blattlagerflansche befestigt. In Fig. 2 sind dies das Blattlagerflansch 21 mit dem Blatt 9 und dem Blattlagerflansch 22 mit dem Blatt 10. Die Ausrichtung des LIDARs 19 ist somit koaxial zur Rotordrehachse 8 ausgerichtet und erzeugt bei drehendem Rotor 6 ein nahezu kreisförmiges Abtastfeld vor der Windturbine 1 in Nabenhöhe.

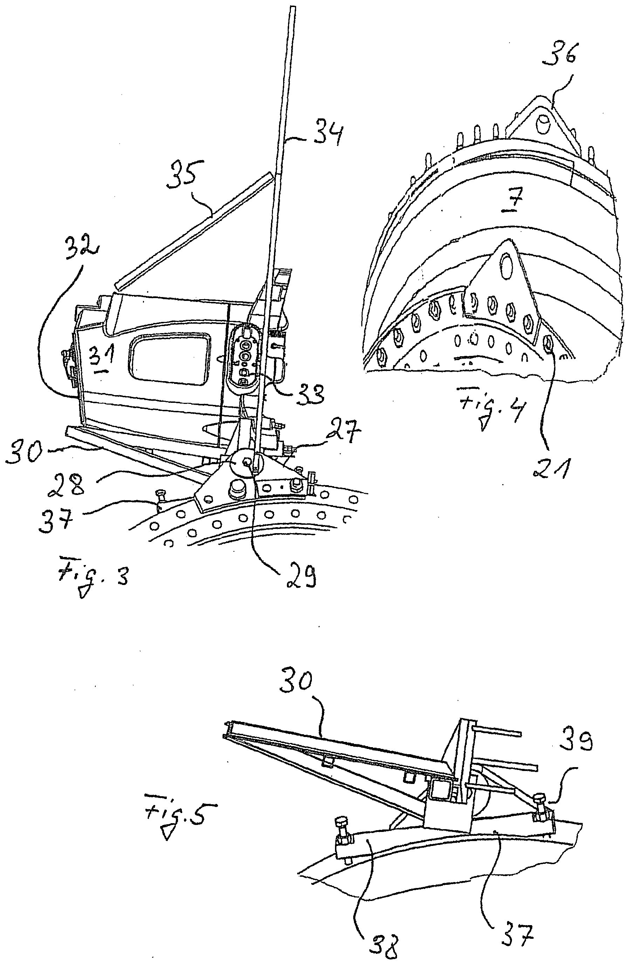

Fig. 3 zeigt in einer Seitenansicht die Befestigung des LIDARs 19 in seiner Halterung 20 an der Verbindung des Nabenflansches mit dem Blattlagerflansch 22. Der Flansch 22 weist am Blattumfang eine Aufnahmevorrichtung 27 für die Halterung 20 auf. Die Aufnahmevorrichtung 27 ist mittels einer Schrauben und Bolzenverbindung an einem radial abragenden Kragen des Nabenflansches befestigt. Die Aufnahmevorrichtung 27 weist ferner eine in Richtung zu ihrem gegenüberliegenden Befestigungsort am benachbarten Blattlagerflansch 21 eine Aufnahmeöse 29 für eine Befestigungsscheibe 28 auf, die an ihren Längsseiten auf jeder Seite einen Befestigungspunkt aufweist, mittels dessen die Halterung 20 mit dem LIDAR 19 auf der Rotornabe 7 befestigt ist. Die Halterung 20 umfasst einen Querträger 30, der in Richtung der Rotorachse ausgerichtet ist.

Die empfindliche Elektronik und Optik des LIDAR ist von einer Schutzhülle 31 umgeben, die in Richtung des Abtastfeldes (links in Fig. 3) eine Fensteröffnung 32 für den Strahlenausgang und -empfang aufweist. In der Schutzhülle 31 integriert ist auch eine elektrischen Steckerverbindung 33 für die Energieversorgung des LIDARS sowie die Übertragung und Auswertung der Messdaten zur Turbinensteuerung 17 in der Gondel 4 oder zu einer separaten nicht dargestellten Fernwarte.

Als Blitzschutzeichrichtung 34 ist der LIDAR 19 in seiner Halterung 18 von einem elektrisch leitenden Gestänge 35 umgeben, dass elektrisch mit der Nabe 7 verbunden ist. Damit ist der LIDAR 19 mit dem Blitzschutzsystem der Windturbine 1 verbunden.

Fig.4 zeigt eine alternative Befestigungsstelle für die Halterung des LIDARs 19 an der Nabe 7 der Windturbine 1. Die Nabe 4 weist jeweils zwei Transport- oder Aufhängeösen 36 auf, in denen ein nicht dargestelltes Tragegeschirr für einen Kran befestigt werden kann, mittels dessen bei Errichtung der Turbine die Nabe mit dem Rotor 6 verbunden werden kann. Die beiden Transportösen 37 sind vorab schon bei der Montage der Nabe am Umfang befestigt worden oder sind integraler Bestandteile des Nabenflansches und verbleiben auch nach der Montage am Umfang des jeweiligen Blattlagerflansches der beiden Nabenflansche. Sie sind radial zur Rotordrehachse 8 aufgerichtet. Das Tragegeschirr des Kranes kann später bei Austausch oder Demontage der Nabe an den beiden Trageösen 36 befestigt werden. Die Befestigungsscheibe 28 mit der Halterung und dem LIDAR 19 kann somit an den Transportösen 36 lösbar befestigt werden.

Fig. 5 zeigt eine einstellbare Justiereinrichtung 37 für den Träger 30 der Halterung 20. Die Einrichtung 37 umfasst einen zusätzlichen quer zur Befestigungsstange 28 und an den beiden Befestigungsorten angeordneten Fuß 38, der sich auf die Nabenoberfläche abstützt. Am ausragenden Ende des Fußes 38 sind einstellbare Justierschrauben 39 vorgesehen, mittels deren der Neigungswinkel des Trägers 30 und damit des LIDARs 19 zur Rotorachse 8 justierbar ist.

Die Erfindung wurde am Beispiel eines in einer Halterung angeordneten LIDARs beschreiben, der in einer speziellen angebrachten Aufnahme- oder einer integrierten Trageöse der Nabe befestigt ist. Es gehört zum Offenbarungsbereich der Erfindung auch Fernwindmessser zu verwenden, die auf einen anderen physikalischen Effekt für die Registrierung und / oder Messung von meteorologischen Daten beruhen. Die erfindungsgemäße Befestigung der Halterung des Fernwindmessers auf der Nabe ist auch bei andersartigen Aufnahmevorrichtungen anwendbar, bei der im Bereich des Nabenflansches eine Manschette auf dem Umfang angeordnet ist, auf der eine Gleitschiene mit einer verstellbaren Aufnahmevorrichtung angeordnet ist, die ebenfalls sowohl als Tragevorrichtung als auch als Haltevorrichtung für den Fernwindmesser verwendet werden kann.

## Patentansprüche

1. Windturbine mit einer um eine Rotorachse (8) rotierenden Rotornabe (7) mit radial zur Rotorachse (8) sich erstreckenden im gleichen Winkelabstand zueinander angeordnete Rotorblättern (9,10,11) und einem außen auf der Oberfläche der Nabe (7) in einer Halterung (20) befestigten Fernwindmesser (19), der so ausgerichtet ist, dass Windeigenschaften im Abstand vor der Nabe (7) feststellbar sind bzw. gemessen werden können, **dadurch gekennzeichnet, dass** der Fernwindmesser (19) zwischen zwei benachbarten Rotorblättern (9, 10) und in radialer Richtung der Rotorachse (8) angeordnet, und die Halterung (20) im Bereich der Verbindung der Rotornabe (7) mit den Rotorblättern (9, 10) an jeweils einem Blattlagerflansch (21, 22) lösbar befestigt ist und so die Windturbine (1) mit dem Fernwindmesser (19) nachrüstbar ist.

2. Windturbine nach Anspruch 1, **dadurch gekennzeichnet, dass** jedem Blattlagerflansch (21, 22, 23) jeweils einem Rotorblatt (9, 10, 11) zugeordnet ist.

3. Windturbine nach Anspruch 1 oder 2, **dadurch gekennzeichnet, dass** das der Blattlagerflansch (21, 22, 23) eine Schraub- und /oder Steckverbindung mit der Nabe (7) umfasst.

4. Windturbine nach einem oder mehreren der vorherigen Ansprüche, **dadurch gekennzeichnet, dass** beide Blattlagerflansche (21, 22), an denen der Fernwindmesser (19) befestigt ist, jeweils eine zusätzliche Aufnahmevorrichtung (27) für die Halterung (20) aufweisen.

5. Windturbine nach Anspruch 4, **dadurch gekennzeichnet, dass** als Aufnahmevorrichtung (27) jeweils eine Trageöse (36) für die Rotornabe (7) verwendet wird, wobei die Trageöse (36) für die Montage / Demontage der Nabe (7) vorgesehen ist, und bei Betrieb der Windturbine (1) am jeweiligen Blattlager (21, 22) verbleiben, wobei die Halterung (20) im Befestigungsbereich mit der Nabe (7) eine in Richtung der Drehachse vorgesehene, zusätzlich Lageranordnung aufweist, die eine in Richtung der Rotorachse (8) einstellbarere Justiereinrichtung (37) für den Fernwindmesser (19) umfasst.

6. Windturbine nach einem oder mehreren der vorherigen Ansprüche, **dadurch gekennzeichnet, dass** der Fernwindmesser (19) eine kastenförmige Schutzhülle (31) aufweist, die mit der Halterung (20) verbunden ist und in Messrichtung eine mit einer strahlendurchgängigen Schutzverkleidung geschlossenen Fensteröffnung (32) aufweist, wobei innerhalb der kastenförmigen Schutzhülle (31) optische und elektrische /elektronische Einrichtungen des Fernwindmessers (19) angeordnet sind.

7. Windturbine nach einem oder mehreren der vorherigen Ansprüche, **dadurch gekennzeichnet, dass** der Fernwindmesser (19) ein LIDAR- oder SODAR System umfasst.

8. Windturbine nach einem oder mehreren der vorherigen Ansprüche, **dadurch gekennzeichnet, dass** der Fernwindmesser (19) elektrische und /oder mechanische Sicherheitseinrichtungen zur Verhinderung von Kollisionsschäden des Fernwindmessers (19) mit rotierenden Rotorblättern (9, 10, 11) oder der Windturbine (1) umfasst, wobei die Sicherheitseinrichtung eine elektrischen Reihenschaltung mehrerer Sicherheitseinrichtungen (Sicherheitskette) umfasst, wobei die Sicherheitskette mit der der Notabschalteinrichtung der Turbine (1) verbindbar bzw. verbunden werden kann.

9. Windturbine nach einem oder mehreren der vorherigen Ansprüche, **dadurch gekennzeichnet, dass** der Fernwindmesser (19) integraler Bestandteil einer Turbinensteuerung (17) ist.

10. Windturbine nach einem oder mehreren der Ansprüche 1 bis 8, **dadurch gekennzeichnet, dass** der Fernwindmesser unabhängig von einer Turbinensteuerung (17) arbeitet und Vergleichsmessungen zu anderen auf der Windturbine (1) angeordneten Messeinrichtungen (18) durchführbar sind bzw. durchgeführt werden können.

11. Fernwindmesser mit einer Halterung zur Befestigung auf der Oberfläche einer rotierenden Rotornabe (7) einer Windturbine (1) nach einem oder mehreren der Ansprüche 1 bis 14, **dadurch gekennzeichnet, dass** die Halterung (20) Befestigungseinrichtungen für eine lösbare Verbindung der Halterung (20) mit der Nabe (7) zwischen zwei benachbarten Rotorblättern (9, 10) an jeweils einem Blattlagerflansch (21, 22) beider Rotorblätter (9, 10) aufweist.

12. Fernwindmesser nach Anspruch 11, **dadurch gekennzeichnet, dass** die Halterung ein Tragegestell mit einer Befestigungsscheibe (28) umfasst, die mit einem Teil einer Schutzhülle (31) des Fernwindmessers (19) verbunden ist, und die Längsenden der Scheibe (28) Befestigungseinrichtungen für den jeweilige Blattlagerflansch (21, 22) umfassen.

13. Fernwindmesser nach Anspruch 11 oder 12, **dadurch gekennzeichnet, dass** die Halterung (20) einen quer zur Befestigungsscheibe (28) und in Richtung der Rotorachse (8) ausgerichteten Träger (30) aufweist, wobei der Träger (30) eine in Richtung der Rotorachse (8) ausgerichtete Justiereinrichtung aufweist,

14. Fernwindmesser nach einen oder mehreren der Ansprüche 11 bis 13, **dadurch gekennzeichnet, dass** die Halterung (20) eine Blitzschutzeinrichtung (34) aufweist, die mit einem Blitzschutzsystem der Windturbine (1) verbunden bzw. verbindbar ist.

## Claims

1. Wind turbine having a rotating rotor hub (7) revolving around a rotary axis (8) with rotor blades (9, 10 11) extending radially relative to the rotor axis (8) at the same angular distance from each other and a remote wind gauge (19) fastened outside on the surface of the hub (7) in a fixture (20) which is aligned so that wind characteristics can be determined or measured at a distance in front of the hub (7), **characterized in that** the remote wind gauge (19) is arranged between two adjacent rotor blades (9, 10) and in the radial direction of the rotor axis (8), and the fixture (20) is detachably fastened in the area where the rotor hub (7) and rotor blades (9,10) are each connected to the respective blade bearing flange (21, 22) in such a way that the remote wind gauge (19) can be retrofitted to the wind turbine (1).

2. Wind turbine in accordance with claim 1, **characterized in that** each blade bearing flange (21, 22, 23) is assigned to a rotor blade (9, 10, 11).

3. Wind turbine in accordance with claim 1 or 2, **characterized in that** the blade bearing flange (21, 22, 23) comprises a screw and/or plug-in connection to the hub (7).

4. Wind turbine in accordance with one or more of the preceding claims, **characterized in that** both blade bearing flanges (21, 22) to which the remote wind gauge (19) is fastened each has an additional receiving device (27) for the fixture (20).

5. Wind turbine in accordance with claim 4, **characterized in that** a lifting lug (36) for the rotor hub (7) is used in each case as the receiving device (27), whereby the lifting lug (36) is provided for assembly/dismantling of the hub (7) and remains at the relevant blade bearing (21, 22) during operation of the wind turbine (1), whereby the fixture (20) has an additional bearing arrangement provided in the direction of the rotary axis at the area where the fixture (20) is fastened to the hub (7), which comprises an adjusting device (37) for the remote wind gauge (19), which can be adjusted in the direction of the rotor axis (8).

6. Wind turbine in accordance with one or more of the preceding claims, **characterized in that** the remote wind gauge (19) has a box-shaped protective enclosure (31) which is connected to the fixture (20) and has a window opening (32) in the measurement direction which is closed by a protective cladding which is permeable to radiation, whereby the optical and electrical/electronic gear of the remote wind gauge (19) is arranged inside the box-shaped protective enclosure (31).

7. Wind turbine in accordance with one or more of the preceding claims, **characterized in that** the remote wind gauge (19) comprises a LIDAR or SODAR system.

8. Wind turbine in accordance with one or more of the preceding claims, **characterized in that** the remote wind gauge (19) includes electrical and/or mechanical safety devices to prevent collision damage of the remote wind gauge (19) with rotating rotor blades (9, 10, 11) or the wind turbine (1), whereby the safety device includes an electrical series circuit of several safety devices (safety chain), whereby the safety chain is or can be connected to the emergency stop device of the turbine (1).

9. Wind turbine in accordance with one or more of the preceding claims, **characterized in that** the remote wind gauge (19) is an integral part of a turbine control system (17).

10. Wind turbine in accordance with one or more of the preceding claims, **characterized in that** the remote wind gauge works independently of a turbine control system (17) and that comparative measurements are or can be carried out to other measuring devices (18) arranged at the wind turbine (1).

11. Remote wind gauge with a fixture for fastening on the surface of a rotating rotor hub (7) of a wind turbine (1) in accordance with one or more of claims 1 to 14, **characterized in that** the fixture (20) has fastening devices for detachable connection of the fixture (20) to the hub (7) between two adjacent rotor blades (9, 10) at one blade bearing flange each (21, 22) of the two rotor blades (9, 10).

12. Remote wind gauge in accordance with claim 11, **characterized in that** the fixture includes a supporting frame with a fastening plate (28) which is connected to a part of the protective enclosure (31) of the remote wind gauge (19), and that the longitudinal ends of the plate (28) include fastening devices for the respective blade bearing flange (21, 22).

13. Remote wind gauge in accordance with claim 11 or 12, **characterized in that** the fixture (20) has a support (30) arranged at right angles to the fastening plate (28) and in the direction of the rotor axis (8), whereby the support (30) has an adjusting device arranged in the direction of the rotor axis (8).

14. Remote wind gauge in accordance with one or more of claims 11 to 13, **characterized in that** the fixture (20) has a lightening protector (34) which is or can be connected to a lightening protector of the wind turbine (1).

## Revendications

1. Éolienne dotée d'un moyeu de rotor (7) se mettant en rotation autour d'un axe de rotor (8) avec des pales de rotor (9, 10, 11) disposées à la même distance angulaire les unes des autres et s'étendant radialement par rapport à l'axe de rotor (8) et un anémomètre à distance (19) fixé à l'extérieur sur la surface du moyeu (7) dans un élément de retenue (20), ledit anémomètre à distance est orienté de telle sorte que les propriétés du vent peuvent être déterminées ou mesurées à distance du moyeu (7), **caractérisée en ce que** l'anémomètre à distance (19) est disposé entre deux pales de rotor voisines (9, 10) et dans la direction radiale de l'axe de rotor (8), et l'élément de retenue (20) est fixé de manière amovible dans la zone de l'assemblage du moyeu de rotor (7) avec les pales de rotor (9, 10) sur une bride de palier de pale (21, 22) et l'éolienne (1) peut ainsi être équipée ultérieurement (1) d'un anémomètre à distance (19).

2. Éolienne selon la revendication 1, **caractérisée en ce que** chaque bride de palier de pale (21, 22, 23) est affectée à une pale de rotor (9, 10, 11).

3. Éolienne selon la revendication 1 ou 2, **caractérisée en ce que** la bride de palier de pale (21, 22, 23) comprend un assemblage vissé et/ou emboîté avec le moyeu (7).

4. Éolienne selon une ou plusieurs des revendications précédentes, **caractérisée en ce que** les deux brides de palier de pale (21, 22) auxquelles l'anémomètre à distance (19) est fixé, présentent chacune un dispositif récepteur supplémentaire (27) pour l'élément de retenue (20).

5. Éolienne selon la revendication 4, **caractérisée en ce qu'**un oeillet de support (36) pour le moyeu de rotor (7) est utilisé en tant que dispositif récepteur (27), l'oeillet de support (36) étant destiné au montage / démontage du moyeu (7), et lors du fonctionnement de l'éolienne (1) reste sur le palier de pale (21, 22) concerné, l'élément de retenue (20) dans la zone de fixation avec le moyeu (7) présentant un agencement de palier supplémentaire disposé dans la direction de l'axe rotatif, qui comprend un dispositif de réglage (37) pouvant être réglé dans la direction de l'axe de rotor (8) pour l'anémomètre à distance (19).

6. Éolienne selon une ou plusieurs des revendications précédentes, **caractérisée en ce que** l'anémomètre à distance (19) présente une enveloppe protectrice en forme de caisson (31), qui est raccordée à l'élément de retenue (20) et présente dans la direction de mesure une ouverture de fenêtre (32) fermée avec un revêtement de protection laissant passer les rayons, des dispositifs optiques et électriques/électroniques de l'anémomètre à distance (19) étant disposés à l'intérieur de l'enveloppe protectrice en forme de caisson (31).

7. Éolienne selon une ou plusieurs des revendications précédentes, **caractérisée en ce que** l'anémomètre à distance (19) comprend un système LIDAR ou SODAR.

8. Éolienne selon une ou plusieurs des revendications précédentes, **caractérisée en ce que** l'anémomètre à distance (19) comprend des dispositifs de sécurité électriques et/ou mécaniques permettant de prévenir les dommages par chocs de l'anémomètre à distance (19) avec les pales de rotor en rotation (9, 10, 11) ou l'éolienne (1), le dispositif de sécurité comprenant un montage électrique en série de plusieurs dispositifs de sécurité (chaîne de sécurité), la chaîne de sécurité pouvant être raccordée à celle du dispositif d'arrêt d'urgence de l'éolienne (1).

9. Éolienne selon une ou plusieurs des revendications précédentes, **caractérisée en ce que** l'anémomètre à distance (19) fait partie intégrante d'une commande d'éolienne (17).

10. Éolienne selon une ou plusieurs des revendications 1 à 8, **caractérisée en ce que** l'anémomètre à distance fonctionne indépendamment d'une commande d'éolienne (17) et des mesures comparatives sont réalisables ou peuvent être réalisées par rapport aux autres dispositifs de mesure (18) disposés sur l'éolienne (1).

11. Anémomètre à distance doté d'un élément de retenue permettant de le fixer sur la surface d'un moyeu de rotor en rotation (7) d'une éolienne (1) selon une ou plusieurs des revendications 1 à 14, **caractérisé en ce que** l'élément de retenue (20) présente des dispositifs de fixation pour un assemblage amovible de l'élément de retenue (20) avec le moyeu (7) entre deux pales de rotor voisines (9, 10) sur chaque bride de palier de pale (21, 22) des deux pales de rotor (9, 10).

12. Anémomètre à distance selon la revendication 11, **caractérisé en ce que** l'élément de retenue comprend un bâti de support avec une plaque de fixation (28) qui est raccordée à une pièce d'une enveloppe protectrice (31) de l'anémomètre à distance (19), et les extrémités longitudinales de la plaque (28) comprennent des dispositifs de fixation pour chaque bride de palier de pale (21, 22).

13. Anémomètre à distance selon la revendication 11 ou 12, **caractérisé en ce que** l'élément de retenue (20) présente un support (30) orienté de manière transversale par rapport à la plaque de fixation (28) et dans la direction de l'axe de rotor (8), le support (30) présentant un dispositif de réglage orienté en direction de l'axe de rotor (8).

14. Anémomètre à distance selon une ou plusieurs des revendications 11 à 13, **caractérisé en ce que** l'élément de retenue (20) présente un dispositif de protection contre la foudre (24) qui est raccordé ou peut être raccordé à un système de protection contre la foudre de l'éolienne (1).
